# EUROPÄISCHE PATENTSCHRIFT

(11) **EP 1 180 585 B1**
(45) Veröffentlichungstag und Bekanntmachung des Hinweises auf die Patenterteilung: **28.01.2004**
(21) Anmeldenummer: 01116907.5
(22) Anmeldetag: 11.07.2001
(51) Int. Cl.: F01N 3/20, F01N 3/22

(54) **Verfahren und Vorrichtung zur katalytischen Abgasnachbehandlung des Abgases einer Brennkraftmaschine**
Method and device for catalytic after treating the exhaust gas of an internal combustion engine
Précédé et dispositif pour le retraitement catalytique des gaz d'échappement d'un moteur a combustion interne

(30) Priorität: 09.08.2000 DE 10038724
(43) Veröffentlichungstag der Anmeldung: 20.02.2002
(73) Patentinhaber: Dr.Ing. h.c.F. Porsche Aktiengesellschaft, 70435 Stuttgart (DE); AUDI AG, 85045 Ingolstadt (DE); Bayerische Motoren Werke Aktiengesellschaft, 80809 München (DE); Volkswagen Aktiengesellschaft, 38436 Wolfsburg (DE)
(72) Erfinder: Küper, Paul, 75446 Wiernsheim (DE); Brahner, Tom, 85049 Ingolstadt (DE)

(56) Entgegenhaltungen:
- DE-A- 2 129 023
- DE-A- 2 254 895
- US-A- 5 457 957
- US-A- 5 802 844

## Beschreibung

### Stand der Technik

Die vorliegende Erfindung betrifft ein Verfahren und eine Vorrichtung zur katalytischen Abgasnachbehandlung des Abgases einer Brennkraftmaschine.

Bei der Abgasnachbehandlung von einer Brennkraftmaschine eines Kraftfahrzeuges hat die Reduzierung der Schadstoffe im Abgas während dem Kaltstart und Warmlauf der Brennkraftmaschine als aussichtsreichstes Potential zur Schadstoffreduzierung Vorrang. Unter anderem sind hierzu Verfahren bekannt, wobei beim Kaltstart ein brennfähiges Luft-/ Kraftstoffgemisch im Abgasstrang erzeugt wird und der im Abgas enthaltene Heizwert zur schnellen Erwärmung der schadstoffumsetzenden Katalysatoren auf deren Starttemperatur bzw. Einsatztemperatur genutzt wird. Dies geschieht dadurch, dass das brennfähige Luft-/ Kraftstoffgemisch an geeigneter Stelle in unmittelbarer Nähe vom Katalysator erneut gezündet wird.

Zur schnellen Aufheizung von einem katalytischen System ist in der WO 93/07365 ein Verfahren zur Abgasnachverbrennung vorgeschlagen worden. Das entsprechende System besteht aus zwei Katalysatoren, zwischen denen eine Brennkammer mit einer Zündhilfe angeordnet ist. Nach dem Kaltstart des Motors wird der Motor fett betrieben, vor dem Katalysatorsystem wird Sekundärluft zugemischt und das brennfähige Abgas-Luftgemisch wird in der Brennkammer gezündet und möglichst vollständig verbrannt. Die Reaktionswärme dient zur schnellen Aufheizung des Katalysators. Während der Heizphase ist das Abgas in der Brennkammer wesentlich wärmer als das zuströmende Abgas.

Der prinzipielle Nachteil des Systems ist, dass nach der Heizphase das System nochmals auskühlen kann und die Katalysatortemperatur unter die Light-Off-Temperatur sinken kann, bis das nachströmende Abgas warm genug ist, um das Gesamtsystem oberhalb der Light-Off-Temperatur zu halten. Ein weiterer Nachteil besteht darin, dass durch die notwendige starke Anfettung die Rohemissionen wesentlich erhöht werden und dass bis zur Entflammung des Abgases Rohabgas ohne Umwandlung in die Umgebung gelangt.

Als Abhilfe wurde vorgeschlagen, anstelle des ersten Katalysators einen HC-Adsorber vor der Brennkammer anzuordnen. Durch diese Anordnung werden zwar HC-Komponenten zwischengespeichert, doch nachteiligerweise kühlt der zweite Träger nach der Heizphase aus und verliert für eine gewisse Zwischenzeit seine Aktivität, bis das zuströmende Abgas das System wieder auf Betriebstemperatur aufgeheizt hat. Weiterhin gelangt in der Desorptionsphase HC aus dem Adsorber ohne Oxidation im zweiten Monolithen in die Umgebung.

Bei einer Verlängerung der Heizphase, die das Auskühlen des Katalysators oder der Katalysatoren hinter der Brennkammer verhindern soll, besteht die Gefahr, daß der Katalysator bzw. die Katalysatoren geschädigt werden.

Die DE 198 04 429 A1 beschreibt ein Verfahren zum schnellen Erreichen der Aktivierungstemperatur eines motornah angeordneten Katalysators einer fremdgezündeten Brennkraftmaschine.

Weiterer Stand der Technik läßt sich der WO 97/25525, der WO 93/07365, der WO 92/22734, der US-A-5,609,021, der US-A-5,685,144, der US-A-5,613,360, der US-A-5,410,872, der US-A-5,425,233 und der GB 2 278 299 A entnehmen.

Aufgabe der vorliegenden Erfindung ist es, ein verbessertes Verfahren und eine verbesserte Vorrichtung zur katalytischen Abgasnachbehandlung des Abgases einer Brennkraftmaschine zu schaffen, wobei eine schnellere und effizientere Erwärmung des Katalysatorsystems möglich ist.

### Vorteile der Erfindung

Das erfindungsgemäße Verfahren mit den Merkmalen des Anspruchs 1 bzw. die entsprechende Vorrichtung nach Anspruch 11 weisen den Vorteil auf, daß durch die motorferne Position eine optimale Vermischung des reaktionsfähigen bzw. zündfähigen Abgases bis zur Entzündung erreicht werden kann und eine Einsparung an Heizenergie erfolgen kann, da durch die motorische Abgaserwärmung der motornahe Hauptkatalysator schneller seine Betriebstemperatur erreicht als der motorferne Startkatalysator.

Die Erfindung ermöglicht eine Aufheizung des katalytischen Abgasentgiftungssystems von Brennkraftmaschinen. Das Katalysatorsystem besteht aus einem motornah angeordneten Hauptkatalysator und einem motorfern angeordneten Startkatalysator. Dabei wird Luft dem Abgas zugeführt und durch Fremdzündung vor dem motorfernen Katalysator zur Reaktion gebracht. Die Heizmaßnahme wird in der Warmlaufphase der Brennkraftmaschine betrieben, da in dieser Zeit die Katalysatoren keine ausreichende Temperatur zur Oxidation von beispielsweise Kohlenwasserstoffen und Kohlenmonoxid und zur Reduktion von beispielsweise Stickoxiden besitzen. Die Besonderheit des Systems liegt in der Trennung der Funktion für das rasche motorferne Aufheizen eines Startkatalysators und der Funktion eines Hauptkatalysators, der durch seine motornahe Funktion frühzeitig die "Light-Off"- bzw. Anspringtemperatur erreicht. Diese Trennung ermöglicht eine Verkürzung der Heizzeit, so daß eine Schädigung des Startkatalysators durch die Heizmaßnahme vermieden wird.

In den Unteransprüchen finden sich vorteilhafte Weiterbildungen und Verbesserungen der Erfindung.

Gemäß einer weiteren bevorzugten Weiterbildung weist die Heizmaßnahme eine zweite Phase ohne die exotherme Reaktion zum Abkühlen bis auf die Anspringtemperatur auf, wobei der Motor stöchiometrisch oder mager betrieben wird. Durch eine solche zeitliche Verkürzung der Erwärmungszeit der Heißmaßnahme läßt sich die thermische Beanspruchung der zweiten Katalysatoreinrichtung stark vermindern.

Gemäß einer weiteren bevorzugten Weiterbildung wird die Mischung derart eingestellt, daß das aus dem Motor kommende Abgas brennfähige Komponenten enthält, und dem Abgas mit brennfähigen Komponenten in der Abgasanlage Luft zugeführt, um eine zündfähige Mischung zu erhalten.

Gemäß einer weiteren bevorzugten Weiterbildung wird die Luft an einer Position stromaufwärts der ersten Katalysatoreinrichtung zugeführt.

Gemäß einer weiteren bevorzugten Weiterbildung wird die Luft an einer Position stromabwärts der ersten Katalysatoreinrichtung zugeführt. Dies hat den Vorteil, daß die erste Katalysatoreinrichtung gegenüber einer ungewollten Verbrennung besser geschützt ist.

Gemäß einer weiteren bevorzugten Weiterbildung werden zwischen der Position, an der die Luft zugeführt wird, und der Position, an der die exotherme Reaktion stattfindet, mindestens zwei Krümmungen im Abgasstrom vorgesehen. Dies sorgt für eine gute Durchmischung der brennfähigen Bestandteile mit der Sekundärluft.

Gemäß einer weiteren bevorzugten Weiterbildung wird vor der zweiten Katalysatoreinrichtung eine Reaktionskammer eingerichtet, in der die exotherme Reaktion mittels einer Zündeinrichtung, vorzugsweise einer Glüheinrichtung, eingeleitet wird. Diese Zündeinrichtung kann z.B. eine Glühkerze oder eine besondere Zündkerze sein. Besonders vorteilhaft ist eine katalytisch beschichtete Glühkerze, wodurch sich Zündtemperatur und Zündenergie senken lassen.

Gemäß einer weiteren bevorzugten Weiterbildung wird die Zündeinrichtung im wesentlichen zentral in der Reaktionskammer angeordnet.

Gemäß einer weiteren bevorzugten Weiterbildung wird die zweite Katalysatoreinrichtung mit einer mehrkomponentigen Integralbeschichtung versehen, welche eine katalytische und eine adsorbierende Komponente für Kohlenwasserstoffe aufweist. Hier kann man erreichen, dass der Temperaturverlauf in der zweiten Katalysatoreinrichtung derart ist, dass das Temperaturfenster zwischen Desorptionsbeginn und Beginn der katalytischen Umsetzung geschlossen ist. Das heißt bei dieser Anordnung des HC-Adsorbers kann einerseits der HC-Anteil aus dem Abgas für die Abgasnachverbrennung genutzt werden, andererseits wird der unverbrannte Anteil im nachfolgenden HC-Adsorber zwischengespeichert und bei der Desorption an der Integralbeschichtung gleichzeitig aufoxidiert. Der motornahe Katalysator heizt sich schnell auf und erreicht seine Anspringtemperatur vor Auskühlung der Integralbeschichtung.

Gemäß einer weiteren bevorzugten Weiterbildung wird stromaufwärts unmittelbar vor der Reaktionskammer der zweiten Katalysatoreinrichtung eine dritte Katalysatoreinrichtung vorgesehen.

Gemäß einer weiteren bevorzugten Weiterbildung wird die dritte Katalysatoreinrichtung mit einer mehrkomponentigen Integralbeschichtung versehen, welche eine katalytische und eine adsorbierende Komponente für Kohlenwasserstoffe aufweist.

Gemäß einer weiteren bevorzugten Weiterbildung ist die Reaktionskammer zylinderförmig ausgeführt. Dadurch läßt sich eine optimale Ausbildung der Flammenfront erreichen.

### Zeichnungen

Ausführungsbeispiele der Erfindung sind in den Zeichnungen dargestellt und in der nachfolgenden Beschreibung näher erläutert.

Es zeigen:
- Fig. 1: eine schematische Darstellung einer Vorrichtung gemäß einer ersten bevorzugten Ausführungsform der vorliegenden Erfindung;
- Fig. 2: eine Ausschnittsvergrößerung der Lufteinleitungseinrichtung der Vorrichtung nach Fig. 1; und
- Fig. 3: eine schematische Darstellung einer Vorrichtung gemäß einer zweiten bevorzugten Ausführungsform der vorliegenden Erfindung.

### Beschreibung der Ausführungsbeispiele

In den Figuren bezeichnen gleiche Bezugszeichen gleiche oder funktionsgleiche Elemente.

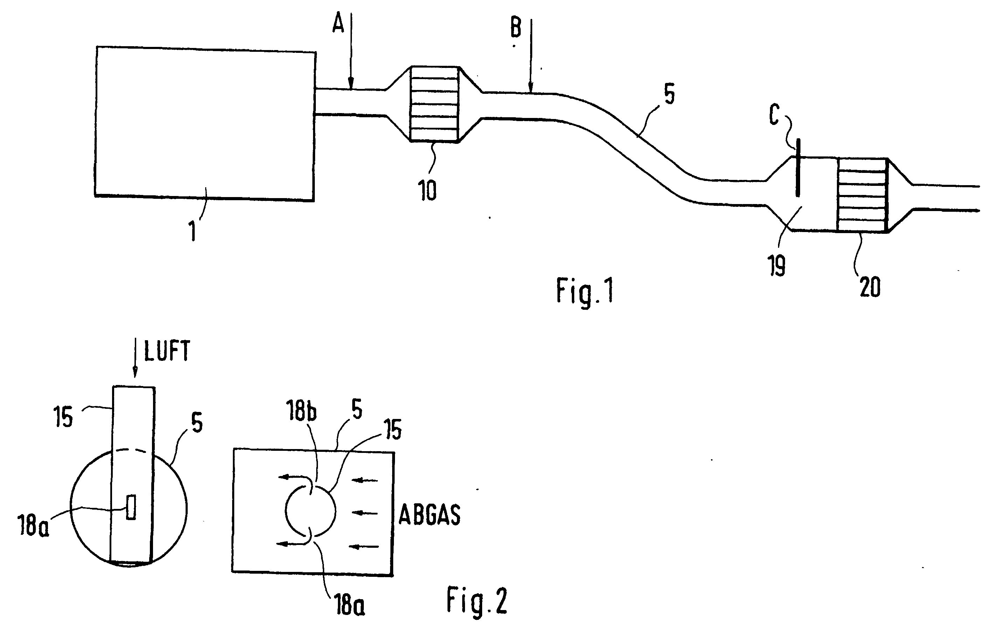

In Fig. 1 bis 3 bezeichnen 1 eine Brennkraftmaschine, 10 eine erste Katalysatoreinrichtung, 20 eine zweite Katalysatoreinrichtung, 5 eine Abgasleitung mit mindestens zwei Umlenkungen, A und B Luftzufuhrpositionen, C eine Zündeinrichtung, 19 eine Reaktionskammer, 15 ein Rohr zur Luftzufuhr sowie 18a,b Schlitze.

Fig. 1 zeigt eine schematische Darstellung einer Vorrichtung gemäß einer ersten bevorzugten Ausführungsform der vorliegenden Erfindung.

Bei der ersten Ausführungsform gemäß Figur 1 ist eine erste Katalysatoreinrichtung 10 in unmittelbarer Nähe der Brennkraftmaschine 1 angeordnet. Diese erste Katalysatoreinrichtung 10 ist der Hauptkatalysator.

Stromabwärts der ersten Katalysatoreinrichtung 10 und verbunden durch die Abgasleitung 5 ist eine zweite Katalysatoreinrichtung 20 mit einer unmittelbar davor angeordneten Brennkammer 19 vorgesehen. In der Brennkammer befindet sich an einem zentralen Ort eine Zündeinrichtung C.

Beim Betrieb dieser ersten Ausführungsform wird in der Reaktionskammer 19 während der Warmlaufphase eine exotherme Reaktion zum Beheizen der zweiten Katalysatoreinrichtung 20 auf ihre Anspringtemperatur ablaufen gelassen. Dies geschieht insbesondere dadurch, dass das aus der Brennkraftmaschine 1 austretende Abgas brennfähige Bestandteile in Form von unverbrannten Kraftstoff, z.B. durch eine Späteinspritzung, aufweist.

Entweder an der Position A oder an der Position B oder an beiden Positionen wird dem Abgas zusätzlich Luft zugeführt, um die im Abgas befindlichen brennfähigen Bestandteile zündfähig zu machen. Eine optimale Zündfähigkeit ergibt sich dabei im stöchiometrischen Fall, d.h. λ = 1 bis ca. λ = 1,15. Bei diesem Betrieb wird unmittelbar nach dem Kaltstart die Zündeinrichtung C durch eine nicht gezeigte Steuereinrichtung eingeschaltet, was beispielsweise im Falle einer Glühkerze einen Glühzustand bedeutet, wodurch die brennfähige Mischung in der Reaktionskammer 19 in einem gewissen Abstand vor der zweiten Katalysatoreinrichtung 20 gezündet wird.

Dies führt dazu, dass die brennfähigen Abgasbestandteile in der Brennkammer exotherm nachreagieren und die zweite Katalysatoreinrichtung 20 ihre Anspringtemperatur während der Warmlaufphase des Motors sehr schnell erreicht.

Hat die erste Katalysatoreinrichtung 10 ihre Anspringtemperatur erreicht und ist voll wirksam, so können die Zündeinrichtung C und die Sekundärluftzufuhr abgeschaltet werden, und auch der λ-Wert kann entsprechend den Motorbedingungen beliebig eingestellt werden.

Die Heizzeit kann darüber hinaus verkürzt werden, indem nach Abschalten der Heizung die im zweiten Katalysator gespeicherte Wärme zur Überbrückung der Restzeit bis zum vollständigen Anspringen des motornahen Hauptkatalysators genutzt wird.

Fig. 2 zeigt eine Ausschnittsvergrößerung der Lufteinlei-tungseinrichtung der Vorrichtung nach Fig. 1.

Bei der Detailansicht von Figur 2 ist ein Beispiel dafür gezeigt, wie die Sekundärluft zweckmäßigerweise in die Abgasleitung 5 eingeführt werden kann. Dies geschieht bei dieser ersten Ausführungsform mittels eines Rohres 15, welches im Wesentlichen senkrecht zur Strömungsrichtung des Abgases in die Abgasleitung 5 eingeführt wird. Das Rohr 15 weist an seinem Mantel Schlitze 18a, b auf, durch welche die Luft aus dem Rohr 15 austreten kann und in die Abgasleitung 5 gelangen kann, wo sie sich mit dem vorbeiströmenden Abgas vermischt. Je nach den aktuellen Strömungsverhältnissen kann die Lage und Anzahl der Schlitze 18a, 18b angepaßt bzw. optimiert werden.

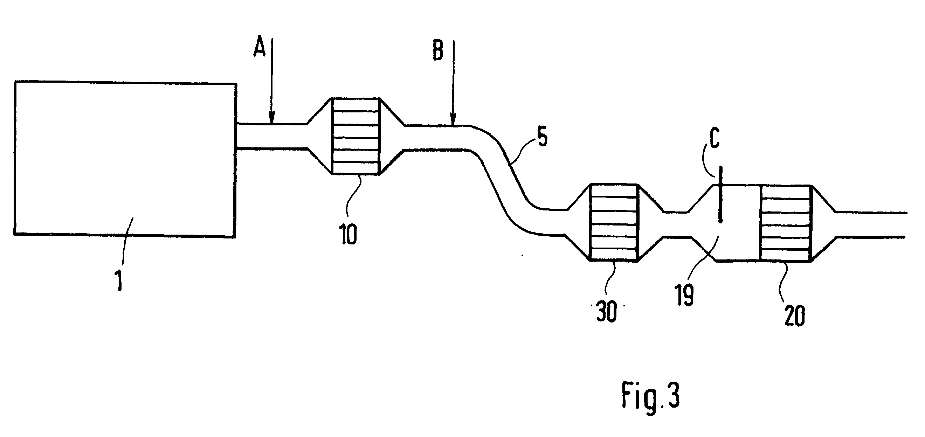

Zwischen der Einleitstelle der Sekundärluft und dem Eintritt in die Brennkammer sind zwei oder mehr Umlenkungen des Abgasrohres für eine gute Durchmischung von Abgas und Sekundärluft zweckmäßig (vgl. Fig. 1 und 3).

Fig. 3 zeigt eine schematische Darstellung einer Vorrichtung gemäß einer zweiten bevorzugten Ausführungsform der vorliegenden Erfindung.

Bei der in Figur 3 gezeigten zweiten Ausführungsform ist unmittelbar vor der Reaktionskammer 19 eine dritte Katalysatoreinrichtung 30 vorgesehen, welche dazu dient, von der Reaktionskammer 19 verursachte Pulsationen während der Warmlaufphase zu verhindern.

Zusätzlichermaßen ist bei dieser zweiten Ausführungsform eine zwei-komponentige Integralbeschichtung in der zweiten Katalysatoreinrichtung 20 vorgesehen, welche einerseits eine HC-adsorbierende Komponente und andererseits eine katalytische Komponente für HC besitzt, so daß bereits unmittelbar nach dem Anlassen auftretende Kohlenwasserstoffe zunächst gebunden werden und dann nach Erreichen der Anspringtemperatur der zweiten Katalysatoreinrichtung 30 katalytisch umgewandelt werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere kann die Luftzufuhr an beliebiger Stelle zwischen dem ersten und zweiten Katalysator erfolgen. Auch kann eine beliebige Zündeinrichtung verwendet werden. Weiterhin ist die Reaktionskammer optionell.

## Patentansprüche

1. Verfahren zur katalytischen Abgasnachbehandlung des Abgases einer Brennkraftmaschine, wobei eine erste Katalysatoreinrichtung (10) in einer motornahen Position in der Abgasanlage und eine zweite Katalysatoreinrichtung (20) in einer motorfernen Position in der Abgasanlage angeordnet wird, **dadurch gekennzeichnet, dass** vor der zweiten Katalysatoreinrichtung (20) eine Reaktionskammer (19) eingerichtet wird, in der eine exotherme Reaktion mittels einer Zündeinrichtung (C) eingeleitet wird, und wobei diese Heizmaßnahme mit der exothermen Reaktion zum Beheizen der zweiten Katalysatoreinrichtung (20) bis über die Anspringtemperatur genutzt wird.

2. Verfahren nach Anspruch 1, **dadurch gekennzeichnet, dass** die Heizmaßnahme eine zweite Phase ohne die exotherme Reaktion zum Abkühlen bis auf die Anspringtemperatur aufweist, wobei der Motor stöchiometrisch oder mager betrieben wird.

3. Verfahren nach Anspruch 1, oder 2, **dadurch gekennzeichnet, dass** die Mischung derart eingestellt wird, dass das aus dem Motor kommende Abgas brennfähige Komponenten enthält, und dass dem Abgas mit den brennfähigen Komponenten in der Abgasanlage Luft zugeführt wird, um eine zündfähige Mischung zu erhalten.

4. Verfahren nach einem der vorhergehenden Ansprüche, **dadurch gekennzeichnet, dass** die Luft an einer Position (A) stromaufwärts der ersten Katalysatoreinrichtung (10) zugeführt wird.

5. Verfahren nach einem der Ansprüche 1 bis 3, **dadurch gekennzeichnet, dass** die Luft an einer Position (B) stromabwärts der ersten Katalysatoreinrichtung (10) zugeführt wird.

6. Verfahren nach einem der Ansprüche 4 oder 5, **dadurch gekennzeichnet, dass** zwischen der Position (A; B), an der die Luft zugeführt wird, und der Position, an der die exotherme Reaktion stattfindet, mindestens zwei Krümmungen im Abgasstrom vorgesehen werden.

7. Verfahren nach einem der vorhergehenden Ansprüche, **dadurch gekennzeichnet, dass** die Zündeinrichtung (C) im wesentlichen zentral in der Reaktionskammer (19) angeordnet wird.

8. Verfahren nach einem der vorhergehenden Ansprüche, **dadurch gekennzeichnet, dass** die zweite Katalysatoreinrichtung (20) mit einer mehrkomponentigen Integralbeschichtung versehen wird, welche eine katalytische und eine adsorbierende Komponente für Kohlenwasserstoffe aufweist.

9. Verfahren nach einem der vorhergehenden Ansprüche, **dadurch gekennzeichnet, dass** stromaufwärts unmittelbar vor der Reaktionskammer (19) der zweiten Katalysatoreinrichtung (20) eine dritte Katalysatoreinrichtung (30) vorgesehen wird.

10. Verfahren nach einem der vorhergehenden Ansprüche, **dadurch gekennzeichnet, dass** die dritte Katalysatoreinrichtung (30) mit einer mehrkomponentigen Integralbeschichtung versehen wird, welche eine katalytische und eine adsorbierende Komponente für Kohlenwasserstoffe aufweist.

11. Vorrichtung zur katalytischen Abgasnachbehandlung des Abgases einer Brennkraftmaschine mit:
zwei räumlich getrennten Katalysatoreinrichtungen (10, 20) in der Abgasanlage, wobei die erste Katalysatoreinrichtung (10) in einer motornahen Position und die zweite Katalysatoreinrichtung (20) in einer motorfernen Position angeordnet ist, **dadurch gekennzeichnet, dass** vor der zweiten Katalysatoreinrichtung (20) eine Reaktionskammer (19) zum Ablaufenlassen einer exothermen Reaktion zum Beheizen der zweiten Katalysatoreinrichtung (20) angeordnet ist und wobei eine Steuereinrichtung vorgesehen ist, welche die exotherme Reaktion zum Beheizen der zweiten Katalysatoreinrichtung (20) während der Warmlaufphase veranlasst, bis die erste Katalysatoreinrichtung (10) ihre Anspringtemperatur erreicht hat.

12. Vorrichtung nach Anspruch 11, **dadurch gekennzeichnet, dass** eine Zuführungseinrichtung (15) zum Zuführen von Luft an einer Position (A) stromaufwärts der ersten Katalysatoreinrichtung (10) vorgesehen ist.

13. Vorrichtung nach Anspruch 11, **dadurch gekennzeichnet, dass** eine Zuführungseinrichtung (15) zum Zuführen von Luft an einer Position (A) stromabwärts der ersten Katalysatoreinrichtung (10) vorgesehen ist.

14. Vorrichtung nach Anspruch 12 oder 13, **dadurch gekennzeichnet, dass** die Zuführungseinrichtung (15) ein in eine Abgasleitung (5) geführtes Rohr (15) aufweist, welches einen geschlitzten Rohrmantel aufweist.

15. Vorrichtung nach Anspruch 14, **dadurch gekennzeichnet, dass** das Rohr (15) im wesentlichen senkrecht zur Strömungsrichtung des Abgases angeordnet ist.

16. Vorrichtung nach einem der Ansprüche 11 bis 15, **dadurch gekennzeichnet, dass** in der Reaktionskammer (19) eine Zündeinrichtung (C), vorzugsweise eine Glüheinrichtung, vorgesehen ist.

17. Vorrichtung nach Anspruch 16, **dadurch gekennzeichnet, dass** die Zündeinrichtung (C) im wesentlichen zentral in der Reaktionskammer (19) angeordnet ist.

18. Vorrichtung nach einem der Ansprüche 11 bis 17, **dadurch gekennzeichnet, dass** die zweite Katalysatoreinrichtung (20) mit einer mehrkomponentigen Integralbeschichtung versehen ist, welche eine katalytische und eine adsorbierende Komponente für Kohlenwasserstoffe aufweist.

19. Vorrichtung nach einem der Ansprüche 11 bis 18, **dadurch gekennzeichnet, dass** stromaufwärts unmittelbar vor der Reaktionskammer (19) der zweiten Katalysatoreinrichtung (20) eine dritte Katalysatoreinrichtung (30) vorgesehen ist.

20. Vorrichtung nach einem der Ansprüche 12 bis 19, **dadurch gekennzeichnet, dass** zwischen der Zuführungseinrichtung (15) und der Reaktionskammer (19) mindestens zwei Krümmungen im Abgasstrom vorgesehen sind.

21. Vorrichtung nach einem der Ansprüche 11 bis 20, **dadurch gekennzeichnet, dass** die Reaktionskammer (19) zylinderförmig ausgeführt ist.

## Claims

1. A process for the catalytic after-treatment of the exhaust gas of an internal-combustion engine, wherein a first catalyst device (10) is arranged in a position close to the engine in the exhaust-gas system and a second catalyst device (20) is situated in a position remote from the engine in the exhaust-gas system, **characterized in that** a reaction chamber (19), in which an exothermic reaction is initiated by means of an ignition device (**C**), is arranged in front of the second catalyst device (20), and wherein the said heating step with the exothermic reaction is utilized in order to heat the second catalyst device (20) to above the light-off temperature.

2. A process according to Claim 1, **characterized in that** the heating step has a second phase without the exothermic reaction for cooling to the light-off temperature, wherein the engine is operated in a stoichiometric or lean manner.

3. A process according to Claim 1 or 2, **characterized in that** the mixture is set in such a way that the exhaust gas leaving the engine contains combustible components, and air is supplied to the exhaust gas with the combustible components in the exhaust-gas system in order to obtain an ignitable mixture.

4. A process according to one of the preceding Claims, **characterized in that** the air is supplied at a position (**A**) upstream of the first catalyst device (10).

5. A process according to one of Claims 1 to 3, **characterized in that** the air is supplied at a position (**B**) downstream of the first catalyst device (10).

6. A process according to one of Claims 4 or 5, **characterized in that** at least two bends are provided in the exhaust-gas flow between the position (**A**; **B**) at which the air is supplied and the position at which the exothermic reaction takes place.

7. A process according to one of the preceding Claims, **characterized in that** the ignition device (**C**) is situated substantially centrally in the reaction chamber (19).

8. A process according to one of the preceding Claims, **characterized in that** the second catalyst device (20) is provided with a multiple-component integral coating which comprises a catalytic component and an adsorbing component for hydrocarbons.

9. A process according to one of the preceding Claims, **characterized in that** a third catalyst device (30) is provided upstream immediately in front of the reaction chamber (19) of the second catalyst device (20).

10. A process according to one of the preceding Claims, **characterized in that** the third catalyst device (30) is provided with a multiple-component integral coating which comprises a catalytic component and an adsorbing component for hydrocarbons.

11. A device for the catalytic after-treatment of the exhaust gas of an internal-combustion engine, with:
two spatially separate catalyst devices (10, 20) in the exhaust-gas system, wherein the first catalyst device (10) is situated in a position close to the engine and the second catalyst device (20) is situated in a position remote from the engine, **characterized in that** a reaction chamber (19) to allow an exothermic reaction to take place in order to heat the second catalyst device (20) is situated in front of the second catalyst device (20), and wherein a control device is provided which triggers the exothermic reaction for heating the second catalyst device (20) during the warming-up phase, until the first catalyst device (10) has reached its light-off temperature.

12. A device according to Claim 11, **characterized in that** a supply device (15) for supplying air is provided at a position (**A**) upstream of the first catalyst device (10).

13. A device according to Claim 11, **characterized in that** a supply device (15) for supplying air is provided at a position (**A**) downstream of the first catalyst device (10).

14. A device according to Claim 12 or 13, **characterized in that** the supply device (15) comprises a tube (15) guided in an exhaust-gas line (5) and which has a slotted tube casing.

15. A device according to Claim 14, **characterized in that** the tube (15) is arranged substantially at a right angle to the direction of flow of the exhaust gas.

16. A device according to one of Claims 11 to 15, **characterized in that** an ignition device (**C**), preferably a glow device, is provided in the reaction chamber (19).

17. A device according to Claim 16, **characterized in that** the ignition device (**C**) is situated substantially centrally in the reaction chamber (19).

18. A device according to one of Claims 11 to 17, **characterized in that** the second catalyst device (20) is provided with a multiple-component integral coating which comprises a catalytic component and an adsorbing component for hydrocarbons.

19. A device according to one of Claims 11 to 18, **characterized in that** a third catalyst device (30) is provided upstream immediately in front of the reaction chamber (19) of the second catalyst device (20).

20. A device according to one of Claims 12 to 19, **characterized in that** at least two bends are provided in the exhaust-gas flow between the supply device (15) and the reaction chamber (19).

21. A device according to one of Claims 11 to 20, **characterized in that** the reaction chamber (19) is cylindrical.

## Revendications

1. Procédé de post-traitement catalytique de gaz d'échappement du gaz d'échappement d'un moteur à combustion interne où sont disposés un premier dispositif de catalyseur (10) en une position proche du moteur dans l'installation d'échappement et un deuxième dispositif de catalyseur (20) en une position éloignée du moteur dans le dispositif d'échappement, **caractérisé en ce que**, avant le deuxième dispositif de catalyseur (20), une chambre de réaction (19) est installée, dans laquelle une réaction exothermique est induite au moyen d'un dispositif d'allumage (C) et où cette mise en chauffe au moyen de la réaction exothermique est utilisée pour chauffer le deuxième dispositif de catalyseur (20) jusqu'à dépasser la température de mise en route.

2. Procédé selon la revendication 1, **caractérisé en ce que** la mise en chauffe présente une deuxième phase sans la réaction exothermique pour le refroidissement jusqu'à la température de mise en route, le moteur étant exploité en mode stochiométrique ou avec un mélange pauvre.

3. Procédé selon la revendication 1 ou 2, **caractérisé en ce que** le mélange est réglé de manière telle que le gaz d'échappement sortant du moteur contient des composants combustibles et que de l'air est apporté avec le gaz d'échappement comprenant les composants combustibles à l'installation d'échappement, de façon à obtenir un mélange inflammable.

4. Procédé selon l'une quelconque des revendications précédentes, **caractérisé en ce que** de l'air est apporté en une position (A) en amont du premier dispositif de catalyseur (10).

5. Procédé selon l'une quelconque des revendications 1 à 3, **caractérisé en ce que** de l'air est apporté en une position (B) en aval du premier dispositif de catalyseur (10).

6. Procédé selon l'une des revendications 4 ou 5, **caractérisé en ce que**, entre la position (A ; B) à laquelle l'air est apporté et la position à laquelle se produit la réaction exothermique, au moins deux coudes sont prévus dans l'écoulement de gaz d'échappement.

7. Procédé selon l'une quelconque des revendications précédentes, **caractérisé en ce que** le dispositif d'allumage (C) est disposé de manière essentiellement centrale dans la chambre de réaction (19).

8. Procédé selon l'une quelconque des revendications précédentes, **caractérisé en ce que** le deuxième dispositif de catalyseur (20) est pourvu d'un enduit intégral à plusieurs composants qui présente un composant catalytique et un composant adsorbant pour l'hydrocarbure.

9. Procédé selon l'une quelconque des revendications précédentes, **caractérisé en ce que**, en amont, immédiatement avant la chambre de réaction (19) du deuxième dispositif de catalyseur (20), un troisième dispositif de catalyseur (30) est prévu.

10. Procédé selon l'une quelconque des revendications précédentes, **caractérisé en ce que** le troisième dispositif de catalyseur (30) est pourvu d'un enduit intégral à plusieurs composants qui présentent un composant catalytique et un composant adsorbant pour l'hydrocarbure.

11. Dispositif pour le post-traitement catalytique de gaz d'échappement du gaz d'échappement d'un moteur à combustion interne comportant :
deux dispositifs de catalyseurs (10, 20) séparés spatialement dans l'installation d'échappement, le premier dispositif de catalyseur (10) étant disposé en une position proche du moteur et le deuxième dispositif de catalyseur (20) en une position éloignée du moteur, **caractérisé en ce que**, avant le deuxième dispositif de catalyseur (20), est disposée une chambre de réaction (19) pour le déroulement d'une réaction exothermique pour le chauffage du deuxième dispositif de catalyseur (20) et où un dispositif de commande est prévu, qui provoque la réaction exothermique pour le chauffage du deuxième dispositif de catalyseur (20) pendant la phase de chauffage du moteur jusqu'à ce que le premier dispositif de catalyseur (10) ait atteint sa température de mise en route.

12. Dispositif selon la revendication 11, **caractérisé en ce qu'**un dispositif d'alimentation (15) pour apporter de l'air en une position (A) en amont du premier dispositif de catalyseur (10) est prévu.

13. Dispositif selon la revendication 1, **caractérisé en ce qu'**un dispositif d'alimentation (15) pour apporter de l'air en une position (B) en aval du premier dispositif de catalyseur (10) est prévu.

14. Dispositif selon la revendication 12 ou 13, **caractérisé en ce que** le dispositif d'alimentation (15) présente un tuyau (15) conduit dans une canalisation d'échappement (5) qui présente une enveloppe de tuyau fendue.

15. Dispositif selon la revendication 14, **caractérisé en ce que** le tuyau 15 est disposé essentiellement perpendiculairement par rapport à la direction d'écoulement du gaz d'échappement.

16. Dispositif selon l'une quelconque des revendications 11 à 15, **caractérisé en ce qu'**un dispositif d'allumage (C), de préférence un dispositif à incandescence, est prévu dans la chambre de réaction (19).

17. Dispositif selon la revendication 16, **caractérisé en ce que** le dispositif d'allumage (C) est disposé de manière essentiellement centrale dans la chambre de réaction (19).

18. Dispositif selon l'une quelconque des revendications 11 à 17, **caractérisé en ce que** le deuxième dispositif de catalyseur (20) est pourvu d'un enduit intégral à plusieurs composants qui présentent un composant catalytique et un composant adsorbant pour l'hydrocarbure.

19. Dispositif selon l'une quelconque des revendications 11 à 18, **caractérisé en ce que**, en amont, immédiatement avant la chambre de réaction (19) du deuxième dispositif de catalyseur (20), un troisième dispositif de catalyseur (30) est prévu.

20. Dispositif selon l'une quelconque des revendications 12 à 19, **caractérisé en ce que**, entre le dispositif d'alimentation (15) et la chambre de réaction (19), deux coudes au moins sont prévus dans l'écoulement de gaz d'échappement.

21. Dispositif selon l'une quelconque des revendications 11 à 20, **caractérisé en ce que** la chambre de réaction (19) est réalisée en une forme cylindrique.
